# EUROPEAN PATENT APPLICATION

(11) **EP 2 186 951 A1**
(43) Date of publication of application: **19.05.2010**
(21) Application number: 07822891.3
(22) Date of filing: 08.08.2007
(51) Int. Cl.: E03B 1/04, C02F 1/78, C02F 1/00

(54) **WATER ECONOMIZER SYSTEM FOR DOMESTIC INSTALLATIONS AND THE LIKE**

(71) Applicant: Dolo Masnou, Francisco Javier, C/Lluis Millet, 2 08304 Mataró (Barcelona) (ES)
(72) Inventor: Dolo Masnou, Francisco Javier, C/Lluis Millet, 2 08304 Mataró (Barcelona) (ES)
(74) Representative: PROPI, S.L.
(86) International application number: PCT/ES2007/000483
(87) International publication number: WO 2009/022026

(57) **Abstract**

Based on the idea of reusing grey water generated by the washhand basin and other sanitary appliances in the bathroom, with the exception of the toilet, storing the grey water in a tank wherefrom the cistern of the toilet is supplied when it is necessary, the invention consists of situating from the grey water intake connector (1) and in a main pipe (5), a particle filter (9), a flow switch (11), a circulation pump (14), an ozone injector (16) with its corresponding water recirculation pump (15), and a check valve (18), the flow switch (11) sending information to a programmable automaton (12) which in turn controls both the aforementioned pumps (14 and 15) and the electrovalve (8) of a secondary pipe (6) wherethrough the grey water is evacuated, by means of the outlet (7) to the building downpipe, when the storage device is full.

It is thereby achieved that the toilet cistern receives perfectly filtered water, to avoid obstructions or loss of sealing in the closure system thereof, and that furthermore the water remains free of bacteria and other microorganisms, which are eliminated by the ozone injector (16).

## Description

### OBJECT OF THE INVENTION

The present invention relates to a system which has been specifically devised to achieve a substantial savings of water in domestic use sanitary systems and others such as offices and other work centres with a similar water use.

The object of the invention is to be able to reuse part of the water consumed, particularly for its use in the toilet, with the subsequent savings that results therefrom.

The invention is therefore applicable in the field of building construction, especially dwellings, and more specifically in the field of sanitary water installations and waste water which form part of said buildings.

### BACKGROUND OF THE INVENTION

The problem of the high cost of drinking water, which is becoming greater and greater, is well known, as it stems from a plurality of different kinds of factors such as the climactic conditions, the increase of population density, the concentration thereof in large urban centres, etc.

One clear solution to the problem, at least a partial solution, consists of reducing the consumption of water on a domestic level, without said decrease in consumption negatively affecting the hygienic activities of the users.

Regardless of the fact that one way of saving water is to consume less, for example by shutting off the taps as much as possible, reducing the flow, etc., one way of achieving a big savings in the consumption of water consists of the reuse thereof, whenever this is possible.

In this last aspect, it is known to store already used waste water from washhand basins, baths, showers and such like in a tank and reuse this previously used water in the toilets, where clean water is obviously not required.

Nevertheless, the known solutions based on this system feature a drawback which is fundamentally based on the following aspects:
- The grey water often carries particles which are big enough to cause problems of obstructions or lack of sealing in the refilling and emptying mechanisms of the cisterns.
- The water to be reused often carries bacteria and other microorganisms which are harmful to one's health.
- In many of them, the positive or negative imbalances between the reusable waste water flow and that necessary to be used in the toilet create problems of service, availability, etc.

### DESCRIPTION OF THE INVENTION

The economizer system proposed by the invention, belonging to this group, wherein the supply of the toilet cistern is provided with waste water from other consumption sources such as those previously mentioned, resolves the previously stated drawback in a completely satisfactory manner, in each and all of the mentioned aspects.

To do this, and more specifically, said system has two basic elements, one unit which treats and eliminates the excess waste water, and another which is a storage tank for the use of the cistern.

The aforementioned treatment unit, with all of the components thereof housed in an open casing, incorporates a grey water intake, which collects all of the waste water from, for example, a bathroom, with the exception of the corresponding toilet, intake which diverges into two branches, one an outlet directly to the building downpipe assisted by an electrovalve, and the other a reuse pipe wherein is established a filter, a flow switch, a water circulation pump, an ozone injector, a second water recirculation pump and a check valve, elements arranged in a line and with this specific sequence, which finishes off in the corresponding water outlet towards the storage tank, which is a substantially flat tank, which can be located in the false ceiling of the bathroom, and wherefrom the cistern is supplied.

A programmable automaton, preferably assisted by a Redox probe established in the tank, which controls the pumps and electrovalves to ensure that the waste water, duly treated, always makes it to the storage tank as long as there is filling capacity in the latter, and that the excess water is eliminated through the by-pass which connects the grey water inlet to the building downpipe, at the same time that a digital screen permits the visual control of the entire system.

In accordance with another of the characteristics of the invention, trap gates which are operatively made in the casing permit the direct access both to said programmable automaton and to the inlet filter, in order to clean the latter and for the maintenance of the automaton.

### DESCRIPTION OF THE DRAWINGS

In order to complement the description which is being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:
Figure 1 shows, according to a perspective schematic representation, a water economizer system for domestic installations and the like carried out in accordance with the object of the present invention, wherein the casing has been represented as transparent to clearly show the interior components thereof.
Figure 2 shows a schematic representation of the casing, wherein the interior components have been eliminated, showing nothing more than the orifices wherethrough the connections of the system to the different water intake and outlet pipes are made.
Figure 3, finally, also shows a schematic representation of the water tank which is complementary to the structure represented in the previous figures, as it appears incorporated in the ozonation system.

### PREFERRED EMBODIMENT OF THE INVENTION

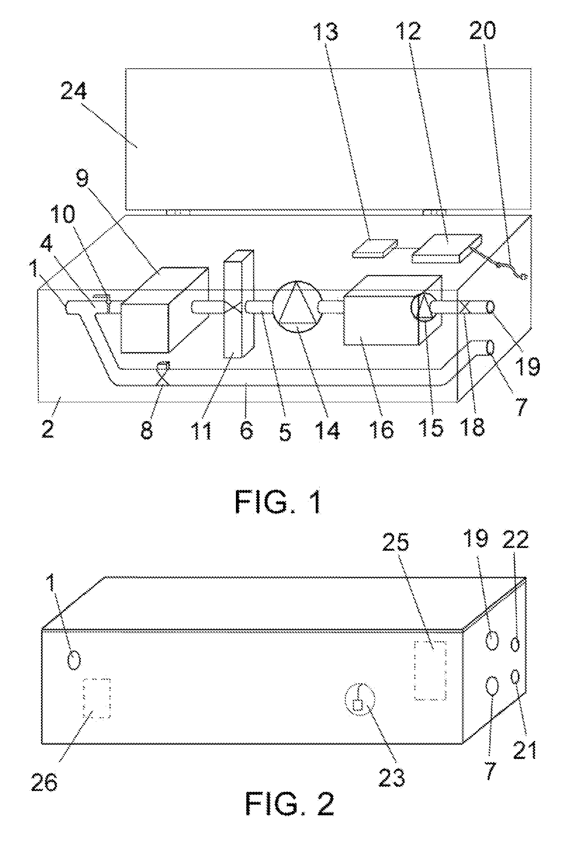

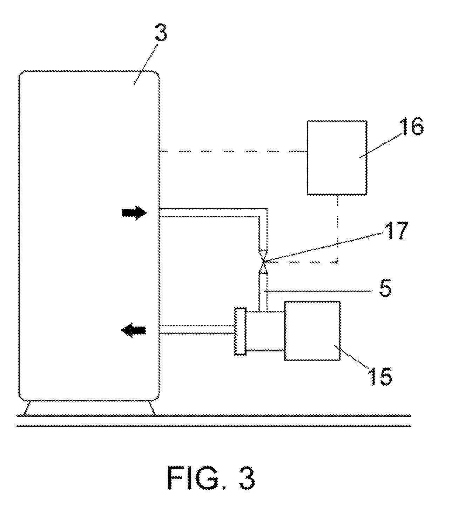

As has been stated previously, the proposed system is the result of the functional combination between the structure shown in figures 1 and 2 and the tank from figure 3, which stores the water generated by the former and the supply to the toilet when the use of the latter is necessary.

In figure 1, the grey water intake (1) provided to be reused is observed, materialized in a threaded connector, whereto is coupled the corresponding collection pipe coming from the washhand basin, shower, etc., connector which is built into the wall of the casing (2) which includes the greater part of the mechanisms of the system, with the exception of the water collection tank (3), as represented in figure 3.

A by-pass (4) determining a main pipe (5) and a secondary pip (6) is established inside the casing (2) and behind the connector (1), so that the filtering and drainage of the waste water which is going to be reused in the cistern is carried out through the pipe (5), while the surplus water is evacuated through the secondary pipe (6), which connects to the building downpipe through another connector (7), this secondary pipe (6) having an electrovalve (8) which is normally kept shut and which will open when the tank (3) is completely full.

In the first place, a filter (9) is established in the main pipe (5) which collects all of the particles which the grey water might be carrying, immediately establishing a shut-off valve (10), manually actuated, which permits one to cut off the path of the water through said main pipe (5), when it is necessary to remove the filter (9) to be cleaned.

Immediately following, a flow switch (11) (flux stat) is situated, responsible for supplying information to a programmable automaton (12) about the presence of water in the main pipe (5), with the purpose of said automaton (12), assisted by a digital screen (13), generating the appropriate control orders about a circulation pump (14) and a recirculation pump (15), the former situated between the flow switch (11) and an ozone injector (16), and the latter built into the ozone generator (11) itself, which actuates on a Venturi (17) established in the main pipe (5), also as observed in figure 3, a check valve (18) being situated immediately following and the main pipe (5) finishing off in another connector (19) established in the wall opposite the casing (1) and whereto will be connected the pipe which links this part of the device to the tank (3).

The programmable automaton (12) will be connected by means of the supply (20) to the general power supply network of the dwelling, the same as the ozone generator (16).

In order to simplify the installation of the system, in addition to the aforementioned connectors, a recycled and treated water intake connector (21) coming from the tank, and the corresponding water outlet connector (22) towards the cistern, are situated inside the wall of the casing (1), the first of them assisted by a ceramic filter (23).

As has previously been mentioned, the casing (2) is open, configuring a type of box provided with an upper lid (24), hinged, also having a pair of registers (25 and 26), the former facing the programmable automaton (12) and the ceramic filter (23), and the latter facing the inlet filter (9).

## Claims

1. Water economizer system for domestic installations and the like, of the type which are provided for the reuse of grey water generated by appliances such as washhand basins, showers, baths and such like, with the exception of the toilet, for the supply of the cistern of the latter, and which have a waste water collection tank wherefrom the cistern is supplied, **characterized in that** an intake connector (1) is established therein, where the pipes of the reusable water converge, connector linked to a main pipe (5) wherein is established, in a row and in this order, a particle filter (9), a flow switch (11), a circulation pump (14), an ozone injector (16) assisted by a recirculation pump (15), and a check valve (18), after which is established a second connector (19) wherethrough the mechanism is connected to the water tank (3), having been provided for the participation in the system of a programmable automaton (12), assisted by a digital screen (13), which controls the system based on the information received from the flow switch (11).

2. Water economizer system for domestic installations and the like, according to claim 1, **characterized in that** a secondary pipe (6) is established parallel to the main pipe (5) by means of a by-pass (4) established immediately after the grey water intake connector (1), this secondary pipe (6) being provided with an electrovalve (8) and connected through another connector (7) to the building downpipe, so that said electrovalve (8) opens when commanded by the programmable automaton (12), when the water tank (3) is full.

3. Water economizer system for domestic installations and the like, according to previous claims, **characterized in that** the ozone injector (16) is connected to the main pipe (5) through a Venturi (17).

4. Water economizer system for domestic installations and the like, according to previous claims, **characterized in that** the different components thereof, with the exception of the water tank (3), are housed inside an open casing (2) through a lid (24), on whose walls are situated and fastened the different connectors for the grey water intake pipe, the direct outlet of said grey water and the treated water outlet towards the tank, this latter assisted by a ceramic filter (23).

5. Water economizer system for domestic installations and the like, according to previous claims, **characterized in that** the two registers are established in the aforementioned casing, one register (25) facing the programmable automaton (12) and the ceramic filter (23), and another register (26) in turn facing the particle filter (9), whereto is immediately established a manual actuation valve (10) to interrupt the flow circulation through the main pipe (5) during the cleaning manoeuvres of the filters.
